# EUROPEAN PATENT APPLICATION

(11) **EP 2 200 358 A2**
(43) Date of publication of application: **23.06.2010**
(21) Application number: 09178046.0
(22) Date of filing: 04.12.2009
(51) Int. Cl.: H04W 12/06, H04L 29/06

(54) **Method, device and system for negotiating authentication mode**

(30) Priority: 04.12.2008 CN 200810218044; 07.09.2009 WO PCT/CN2009/073790
(71) Applicant: Huawei Device Co., Ltd., Shenzhen, Guangdong 518129 (CN)
(72) Inventor: Zhang, Wei, 518129, Shenzhen Guangdong (CN)
(74) Representative: Körber, Martin Hans

(57) **Abstract**

The present disclosure discloses a method, device and system for negotiating authentication mode. A first negotiation request carrying an authentication mode supported by a terminal is sent to an authentication server, so that the authentication server determines and sends an authentication mode supported by both the authentication server and the terminal, where the authentication mode is determined according to an authentication mode supported by the authentication server and the authentication mode supported by the terminal in the first negotiation request. The authentication mode supported by both the authentication server and the terminal is received by the terminal from the authentication server. Therefore, according to the disclosure, a common authentication mode supported by both the authentication server and the terminal is negotiated before the authentication is performed.

## Description

### FIELD OF TECHNOLOGY

The disclosure relates to the field of wireless communication, particularly to a method, device and system for negotiating authentication mode.

### BACKGROUND OF THE DISCLOSURE

Worldwide Interoperability for Microwave Access (WiMAX) is a new broadband wireless access technique based on the 802.16 standard of the Institute of Electrical and Electronics Engineering (IEEE). It provides high speed connection to the Internet and long distance coverage, and has advantages such as guaranteed Quality of Service (QoS), high transmission rate, rich services, good security and reliability, and support for high speed movement. WiMAX adopts advanced techniques representing the development trend of future communication technology, such as Orthogonal Frequency Division Multiplexing (OFDM), Orthogonal Frequency Division Multiple Access (OFDMA), and Multiple Input Multiple Output (MIMO).

The secure access of WiMAX is implemented through authentication. The authentication concerns network elements including a Mobile Station (MS), a Base Station (BS), a Gateway (GW) and an Authentication Authorization Accounting (AAA) server. During the negotiation of SSBasicCapabilities (SBC) for accessing to a network, the MS and the GW perform an authorization policy negotiation. That is, both parties negotiate the following: to adopt an Extensible Authentication Protocol (EAP) authentication, adopt RSA authentication, or do not support authentication. With an apparatus compatible with IEEE 802.16e, if the MS and the GW both support authentication, the two parties adopt the EAP authentication. The EAP supports multiple authentication modes, such as EAP-Transport Layer Security (EAP-TLS), EAP-Tunnel Transport Layer Security (EAP-TTLS), EAP-Authentication and Key Agreement (EAP-AKA), and EAP-Subscriber Identification Module (EAP-SIM) which are widely used at present. Besides, for some authentication modes such as EAP-TTLS, a security tunnel may be established during authentication, where authentications of Challenge Handshake Authentication Protocol (CHAP), MS-CHAPv1 and MS-CHAPv2 may be performed in the security tunnel.

Both parties of the authentication need to determine a common authentication mode to perform subsequent authentications. Currently, an authentication mode and a tunneling method are configured manually for a terminal (for example, MS) and a network-side apparatus (for example. GW or AAA server). In this case, if a user is not professional, and the configuration performed by the user may be incorrect. In addition, various commercialized terminals and GWs (or AAA servers) have currently implemented the main EAP authentication modes. If the terminal (MS) and the network-side apparatus (GW or AAA server) are provided by different manufacturers, interconnection and communication between the terminal and the network-side apparatus cannot be realized.

### SUMMARY OF THE DISCLOSURE

The embodiments of the present disclosure provide a method for negotiating authentication mode. By using the method, an authentication mode supported by both a terminal and a network-side device is determined through a dynamic negotiation between the terminal and the network-side device before the authentication, so as to avoid a configuration process before the authentication, and improve intercommunications between terminals and network-side devices of different manufacturers.

The embodiments of the present disclosure further provide a device and system for negotiating authentication mode.

To achieve the above objects, the technical solutions of the embodiments of the present disclosure are implemented as follows:

A method for negotiating authentication mode comprises: sending a first negotiation request carrying an authentication mode supported by a terminal to an authentication server, so that the authentication server determines and sends an authentication mode supported by both the authentication server and the terminal, where the authentication mode is determined according to an authentication mode supported by the authentication server and the authentication mode supported by the terminal in the first negotiation request; and receiving from the authentication server the authentication mode supported by both the authentication server and the terminal.

A method for negotiating authentication mode comprises: receiving from an authentication server a second negotiation request carrying an authentication mode supported by the authentication server; determining an authentication mode supported by both the authentication server and the terminal according to an authentication mode supported by a terminal and the authentication mode supported by the authentication server in the second negotiation request; and sending the authentication mode supported by both the authentication server and the terminal to the authentication server.

A terminal comprises: a sending unit adapted to send a first negotiation request carrying an authentication mode supported by the terminal to an authentication server, so that the authentication server determines and sends an authentication mode supported by both the authentication server and the terminal according to an authentication mode supported by the authentication server and the authentication mode supported by the terminal in the first negotiation request; and a receiving unit connected to the sending unit and adapted to receive from the authentication server the authentication mode supported by both the authentication server and the terminal.

A base station comprises: a receiving unit adapted to receive from a terminal a BasicCapacities request message carrying an authentication mode supported by the terminal and to receive from an authentication server a first negotiation response carrying an authentication mode supported by both the authentication server and the terminal; an encapsulating unit adapted to encapsulate the authentication mode supported by the terminal into a first negotiation request, and to encapsulate the authentication mode supported by both the authentication server and the terminal in the first negotiation response into a BasicCapacities response message; and a sending unit adapted to send the first negotiation request to the authentication server and to send the terminal the BasicCapacities response message carrying the authentication mode supported by both the authentication server and the terminal.

An authentication server comprises: a receiving unit adapted to receive from a terminal a first negotiation request carrying an authentication mode supported by the terminal; a deciding unit adapted to decide an authentication mode supported by both the authentication server and the terminal, where the authentication mode is determined according to the an authentication mode supported by the authentication server and the authentication mode supported by the terminal in the first negotiation request; and a sending unit adapted to send the terminal the authentication mode supported by both the authentication server and the terminal.

A terminal comprises: a receiving unit adapted to receive from an authentication server a second negotiation request carrying a first authentication mode supported by the authentication server; a deciding unit adapted to decide an authentication mode supported by both the authentication server and the terminal according to an authentication mode supported by the terminal and the first authentication mode supported by the authentication server in the second negotiation request; and a sending unit adapted to send the authentication mode supported by both the authentication server and the terminal to the authentication server.

An authentication server comprises: a sending unit adapted to send a second negotiation request carrying a first authentication mode supported by the authentication server to a terminal, so that the terminal determines an authentication mode supported by both the authentication server and the terminal according to an authentication mode supported by the terminal and the first authentication mode supported by the authentication server in the second negotiation request; and a receiving unit adapted to receive from the terminal the authentication mode supported by both the authentication server and the terminal.

As can be seen from the above solutions, with the method, device and system for negotiating authentication mode according to the embodiments of the present disclosure, a terminal and an authentication server negotiate a common authentication mode to be used in subsequent authentication supported by both of the terminal and the authentication server before the authentication, so as to avoid participation of the user, ensure the normal implement of the authentication, and realize intercommunications between terminals and network-side devices of different manufacturers.

### BRIEF DESCRIPTION OF THE DRAWINGS

FIG. 1 is flow diagram of a method for negotiating authentication mode according to a first embodiment of the present disclosure.
FIG. 2 is an interactive flow diagram of a method for negotiating authentication mode according to a second embodiment of the present disclosure.
FIG. 3 is a flow diagram of a method for negotiating authentication mode according to a third embodiment of the present disclosure.
FIG. 4 is a schematic block diagram of a terminal according to a fourth embodiment of the present disclosure.
FIG. 5 is a schematic block diagram of a base station according to a fifth embodiment of the present disclosure.
FIG. 6 is a schematic block diagram of an authentication server according to a sixth embodiment of the present disclosure.
FIG. 7 is a schematic block diagram of a terminal according to an eighth embodiment of the present disclosure.
FIG. 8 is a schematic block diagram of an authentication server according to a ninth embodiment of the present disclosure.
FIG. 9 is a schematic block diagram of a system for negotiating authentication mode according to a tenth embodiment of the present disclosure.

### DETAILED DESCRIPTION OF THE DISCLOSURE

To make the object, the technical solution and the advantages of the present disclosure clearer, detailed descriptions of the embodiments of the disclosure are provided in combination with the drawings.

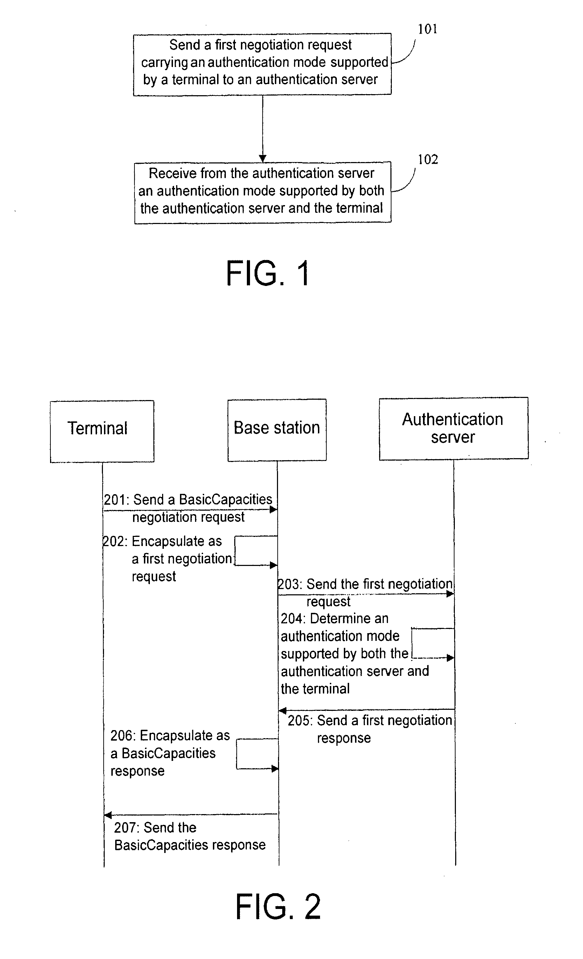

The first embodiment of the present disclosure provides a method for negotiating authentication mode. The method is hereinafter described with reference to FIG. 1.

In step 101, a terminal sends an authentication server a first negotiation request carrying an authentication mode supported by the terminal, so that the authentication server determines an authentication mode supported by both the authentication server and the terminal, where the authentication mode is determined according to the an authentication mode supported by the authentication server and the authentication mode supported by the terminal in the first negotiation request, and sends the authentication mode supported by both the authentication server and the terminal to the terminal.

In step 102, the terminal receives the authentication mode supported by both the authentication server and the terminal, which is sent by the authentication server.

To sum up, the method for negotiating authentication mode according to the embodiment of the present disclosure determines a common authentication mode to be used during the subsequent authentication, thereby avoiding manual participation, and ensuring the normal implement of the authentication.

The second embodiment of the present disclosure provides a method for negotiating authentication mode, as shown in an interactive flow diagram between a terminal, a base station and an authentication server of FIG. 2. The method is described as follows.

In step 201, the terminal sends a BasicCapacities request message carrying an authentication mode supported by the terminal to the base station currently serving the terminal.

In step 202, the base station encapsulates the authentication mode supported by the terminal into a first negotiation request.

In step 203, the base station sends the encapsulated first negotiation request to the authentication server.

In step 204, after receiving the first negotiation request, the authentication server determines an authentication mode supported by both the authentication server and the terminal, where the authentication mode is determined according to an authentication mode supported by the authentication server and the authentication mode supported by the terminal in the first negotiation request.

The authentication server determines the authentication mode supported by both the authentication server and the terminal according to whether the terminal passes the user verification. When the terminal is provided for the first time, it includes a digital certificate. For example, a WIMAX terminal further includes communication frequency point information of an initial usage. When the terminal is powered on for the first time, the interaction between the terminal and the authentication server adopts a method of device authentication. When the terminal operates for the first time after the device authentication is passed, the terminal uses the digital certificate to communicate with the authentication server at the pre-stored frequency point, registers an account (that is, creates user account information such as user name and password) and required services.

When the terminal is restarted, the terminal and the authentication server adopt user authentication because the terminal has user account information such as a user name and password. The user authentication is more secure than the device authentication adopted during the initial usage of the terminal.

The authentication server determines an authentication mode that is supported by both the authentication server and the terminal according to whether the terminal is powered on for the first time.

When the terminal is used for the first time, the authentication server selects an authentication mode corresponding to the device authentication from the authentication mode respectively supported by the authentication server and the terminal. For example, if the authentication mode EAP-TLS corresponds to the device authentication, and this authentication mode is included both in the authentication mode supported by the terminal and in the authentication mode supported by the authentication server, the authentication server may select EAP-TLS as the negotiation result for use in the process of subsequent authentication.

When the terminal is restarted to communicate with the authentication server after the terminal is used for the first time, it can be deemed that both the terminal and the authentication server adopt the mode of user authentication. Authentication modes corresponding to the user authentication include EAP-TTLS, EAP-AKA and EAP-SIM. When the authentication modes respectively supported by the terminal and the authentication server include the previous authentication modes, the authentication server can select one of them as the authentication mode used in the process of authentication.

In step 205, the authentication server sends a first negotiation response to the base station.

In step 206, after receiving the first negotiation response, the base station encapsulates the authentication mode supported by both the authentication server and the terminal in the first negotiation response into the BasicCapacities response message.

In step 207, the base station sends the encapsulated BasicCapacities response message to the terminal.

The method for negotiating authentication mode that is provided in the embodiment is implemented during the process of capacity negotiation between the terminal and the base station. Before the capacity negotiation between the terminal and the base station, there is a process of networking initialization between the terminal and the base station, including distance measurement, etc..

The terminal of the embodiment may specifically be a mobile station, and the authentication mode supported by the mobile station is sent to the base station within the BasicCapacities request message. After the authentication mode is re-encapsulated by the base station, it is carried in a terminal state change request and sent to the authentication server. Accordingly, after determining the authentication mode supported by both the authentication server and the terminal, the authentication server carries the authentication mode supported by both the authentication server and the terminal in a terminal state change response, and sends the terminal state change response to the base station. The base station re-encapsulates the authentication mode supported by both the authentication server and the terminal into a BasicCapacities response message, and sends the BasicCapacities response message to the mobile station. When the process of negotiating the authentication mode is completed, the subsequent authentication process can be continued.

Specifically, the authentication mode supported by the terminal and the authentication mode supported by both the terminal and the authentication server are represented with triples of Type-Length-Value, TLV. Furthermore, the mode is represent ed with Boolean type value of the content field in the TLV. Table 1 provides an example.

**Table 1**

| Type | Length | Value |
|---|---|---|
| Undefined | 1 or 2 bytes | Each bit represents an EAP authentication mode. If a bit is set to 1, it indicates that the terminal supports a corresponding authentication mode. The following are examples: |
| | | Bit#0: EAP-TLS |
| | | Bit#1: EAP-TTLS |
| | | ... (other authentication modes) |

The length of the TLV is one or two bytes, where each bit can be preset to correspond to an authentication mode. If the bit is set to 1, it indicates that the authentication mode is supported. For example, if Bit#0 is set to 1, the EAP-TLS method is supported. During capacity negotiation, the MS carries the TLV in the BasicCapacities request message and reports the BasicCapacities request message to the BS, and then the BS sends the TLV to the authentication server that may be set in the GW, through a terminal state change request. The GW may sele ct a certain authentication mode supported by both the GW and the MS and sends the selected authentication mode to the BS through terminal state change response message; and the BS sends the authentication mode to the MS through BasicCapacities response message.

EAP-TTLS is an authentication mode capable of carrying out a tunnel authentication, where the tunnel is used to transmit the data that needs to be encrypted, such as user name and password. If EAP-TTLS is adopted to transmit the authentication mode supported by the terminal and the authentication mode supported by both the terminal and the server, the TLV as shown in the following table needs be defined in the tunnel authentication.

**Table 2**

| Type | Length | Value |
|---|---|---|
| Undefined | 1 or 2 bytes | Each bit represents a tunnel authentication mode. If a bit is set to 1, it indicates that the terminal supports the authentication mode. The following are examples: |
| | | Bit#0: CHAP |
| | | Bit#1: MSCHAPv1 |
| | | Bit#1: MSCHAPv2 |

In the above table, if Bit#0 is set to 1, the CHAP mode is supported. The negotiation method of the tunnel authentication is similar to the method for negotiating authentication mode in the example corresponding to Table 1, and herein is not described in detail.

To sum up, in the method for negotiating authentication mode that is provided by the embodiment of the present disclosure, the TLV is added during the capacity negotiation process between the terminal, the base station and the authentication server before the authentication is performed, where the TLV carries the authentication mode supported by the terminal and the authentication mode supported by both the terminal and the server. In addition, a dynamic negotiation of authentication mode between the terminal and the authentication server is realized before the authentication process, so that the subsequent authentication can be performed smoothly.

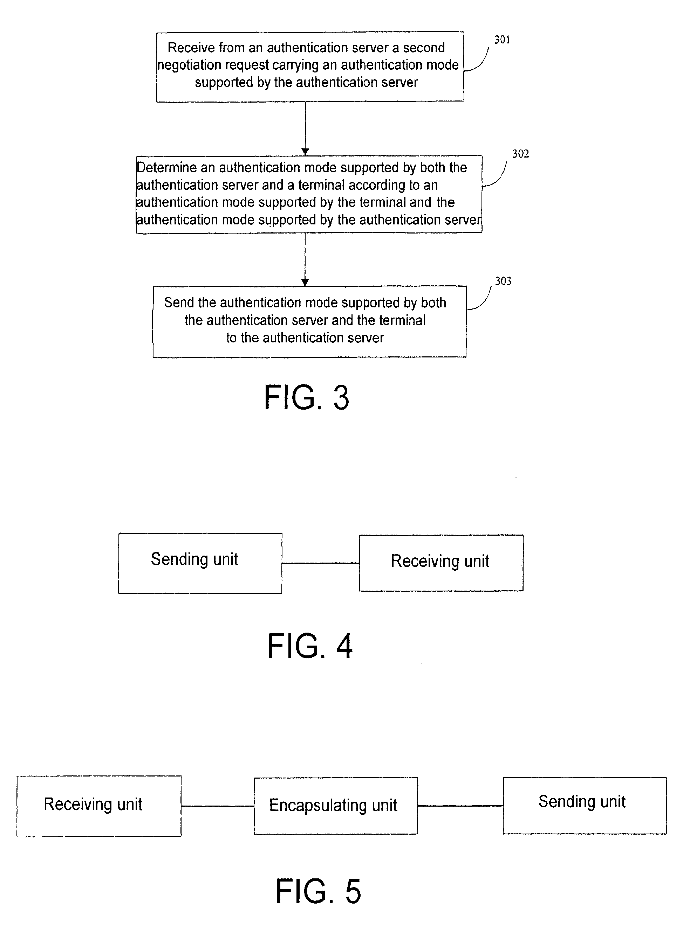

The fourth embodiment of the present disclosure provides a terminal, as shown in FIG. 4, comprising a sending unit and a receiving unit that are connected to each other.

The sending unit is adapted to send a first negotiation request carrying an authentication mode supported by the terminal to an authentication server, so that the authentication server determines and sends an authentication mode supported by both the authentication server and the terminal according to the authentication mode supported by the authentication server and the authentication mode supported by the terminal in the first negotiation request.

The receiving unit is adapted to receive the authentication mode supported by both the authentication server and the terminal, which is sent by the authentication server.

Specifically, the sending unit is adapted to send a BasicCapacities request message carrying the authentication mode supported by the terminal to a base station currently serving the terminal, and after encapsulating the authentication mode supported by the terminal into the first negotiation request, the base station sends the first negotiation request to the authentication server.

The receiving unit is adapted to receive a BasicCapacities response message including the authentication mode supported by both the authentication server and the terminal sent by the base station.

The BasicCapacities response message including the authentication mode supported by both the authentication server and the terminal is generated by the base station, which receives a first negotiation response carrying the authentication mode supported by the authentication server and the terminal sent from the authentication server and encapsulates the authentication mode supported by both the authentication server and the terminal carried in the first negotiation response into the BasicCapacities response message.

The method of negotiating authentication mode of the embodiment is implemented during the process of capacity negotiation between the terminal and the base station. Before the capacity negotiation between the terminal and the base station, there are processes of networking initializations between the terminal and the base station including distance measurement.

The terminal of the embodiment may be a mobile station, and the authentication mode supported by the mobile station are carried in the BasicCapacities request message and sent to the base station. After being re-encapsulated by the base station, the authentication mode supported by the mobile station is carried in a terminal state change request message and sent to the authentication server. Likewise, after determining the authentication mode supported by both the authentication server and the terminal, the authentication server carries it in a terminal state change response message and sends it to the base station. The base station re-encapsulates the authentication mode supported by both the authentication server and the terminal into the BasicCapacities response message, and sends the BasicCapacities response message to the mobile station. When the above negotiation of the authentication mode is completed, the subsequent authentication process can be continued.

In the embodiment, the authentication mode supported by the terminal and the authentication mode supported by both the authentication server and the terminal are represented with triples of TLV. Please refer to the examples provided in Tables 1 and 2 for details, and herein are not described again.

The terminal in the embodiment initiates a first negotiation request to the authentication server at the network side, so that the authentication server at the network side selects an authentication mode supported by both the authentication server and the terminal from the authentication mode respectively supported by the authentication server and the terminal. This can ensure that subsequent authentications can be continued normally without any manual configuration, and meanwhile, intercommunications between the terminal and the network side can be guaranteed.

The fifth embodiment of the present disclosure provides a base station, as shown in FIG. 5, including a receiving unit, an encapsulating unit and a sending unit connected in series.

The receiving unit is adapted to receive from a terminal a BasicCapacities request message carrying an authentication mode supported by the terminal, and to receive from the authentication server a first negotiation response carrying an authentication mode supported by both the authentication server and the terminal.

The encapsulating unit is adapted to encapsulate the authentication mode supported by the terminal into a first negotiation request, and to encapsulate the authentication mode supported by both the authentication server and the terminal in the first negotiation response into a BasicCapacities response message.

The sending unit is adapted to send the first negotiation request to the authentication server, and to send the terminal the BasicCapacities response message including the authentication mode supported by both the authentication server and the terminal.

The negotiating authentication mode process of the embodiment is performed during the process of capacity negotiation between the terminal and the base station. Before the capacity negotiation between the terminal and the base station, there are processes of networking initializations including distance measurement between the terminal and the base station.

The terminal of the embodiment may be a mobile station, and the authentication mode supported by the mobile station are carried in the BasicCapacities request message and sent to the base station. After being re-encapsulated by the base station, the authentication mode supported by the mobile station is carried in a terminal state change request and sent to the authentication server. Likewise, after determining the authentication mode supported by both the authentication server and the terminal, the authentication server carries it in a terminal state change response and sends the terminal state change response to the base station. The base station re-encapsulates the authentication mode supported by both the authentication server and the terminal into the BasicCapacities response message, and sends the BasicCapacities response message to the mobile station. After the above process of negotiating authentication mode is completed, the subsequent authentication process may be continued.

The base station of the embodiment is a base station currently serving the terminal. The base station re-encapsulates the authentication mode that is supported by the terminal and sent by the terminal into the first negotiation response, and sends the first negotiation response to the authentication server, so that the authentication server can select the authentication mode appropriate for the terminal and the authentication server according to the authentication modes respectively supported by the terminal and the authentication server, and hence prepare for subsequent process of the authentication.

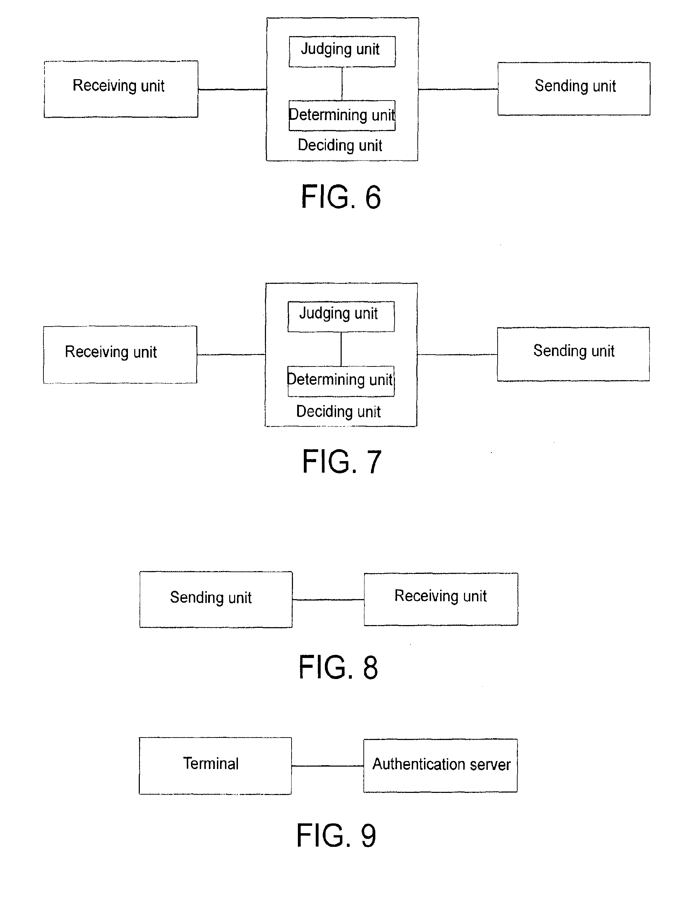

The sixth embodiment of the present disclosure provides an authentication server as shown in FIG. 6, comprising a receiving unit, a deciding unit and a sending unit connected in series.

The receiving unit is adapted to receive from a terminal a first negotiation request carrying an authentication mode supported by the terminal.

The deciding unit is adapted to decide an authentication mode supported by both the authentication server and the terminal according to the authentication mode supported by the authentication server and the authentication mode supported by the terminal in the first negotiation request.

The sending unit is adapted to send the terminal the authentication mode supported by both the authentication server and the terminal.

Further, the deciding unit comprises a judging unit and a determining unit.

The judging unit is adapted to judge whether the terminal passes a user authentication and a device authentication.

The determining unit is adapted to determine the authentication mode supported by both the authentication server and the terminal as an authentication mode corresponding to the user authentication, when the terminal passes the user authentication.

The determining unit is further adapted to determine the authentication mode supported by both the authentication server and the terminal as an authentication mode corresponding to the device authentication, when the terminal passes the device authentication while does not pass the user authentication.

The authentication server determines the authentication mode supported by both the authentication server and the terminal according to whether the terminal passes the user verification. When the terminal is provided for the first time, it includes a digital certificate. For example, a WIMAX terminal further includes communication frequency point information of an initial usage. When the terminal is powered on for the first time, the interaction between the terminal and the authentication server adopts a method of device authentication. When the terminal operates for the first time after the device authentication is passed, the terminal uses the digital certificate to communicate with the authentication server at the pre-stored frequency point, registers an account (that is, creates user account information such as user name and password) and required services..

When the terminal is restarted, the terminal and the authentication server adopt user authentication because the terminal has user account information such as a user name and password. The user authentication is more secure than the device authentication adopted during the initial usage of the terminal.

The authentication server determines an authentication mode that is supported by both the authentication server and the terminal according to whether the terminal is powered on for the first time.

When the terminal is used for the first time, the authentication server selects an authentication mode corresponding to device authentication from the authentication mode respectively supported by the authentication server and the terminal. For example, if the authentication mode EAP-TLS corresponds to the device authentication, and this authentication mode is included both in the authentication mode supported by the terminal and in the authentication mode supported by the authentication server, the authentication server may select EAP-TLS as the negotiation result, for the subsequent process of the authentication.

When the terminal is restarted to communicate with the authentication server after the terminal is used for the first time, it can be assumed that the terminal and the authentication server adopt the mode of user authentication. Authentication mode corresponding to the user authentication include EAP-TTLS, EAP-AKA and EAP-SIM. When the authentication modes respectively supported by the terminal and the authentication server both include the previous authentication modes, the authentication server can select one of them as the authentication mode for use in the process of authentication.

The authentication modes supported by the terminal and by both the terminal and the authentication server transferred between the terminal and the authentication server are represented with triples of Type-Length-Value, TLV. The definition and transmission process of the TLV are described in detail with reference to the examples corresponding to Tables 1 and 2. The authentication server may be set in network facilities such as a gateway.

To sum up, the authentication server according to the embodiment of the present invention determines an authentication mode that should be selected by the terminal and the authentication server in the authentication process, in accordance with the authentication mode supported by the terminal and the authentication mode supported by the authentication server, as well as by judging whether the terminal passes the user authentication, so as to prepare for the subsequent process of the authentication communication between the terminal and the authentication server, without any manual configuration in the negotiation process, and meanwhile, the intercommunications between the terminal and the network side are guaranteed.

The seventh embodiment of the present disclosure provides a system for negotiating authentication mode as shown in FIG. 2, comprising a terminal, a base station and an authentication server connected in series.

The terminal is adapted to send a first negotiation request carrying authentication mode supported by the terminal to the authentication server, and the authentication server determines and sends the terminal an authentication mode supported by both the authentication server and the terminal, where the authentication mode is determined according to the authentication mode supported by the authentication server and the authentication mode supported by the terminal in the first negotiation request.

The terminal receives the authentication mode supported by both the authentication server and the terminal sent from the authentication server.

The above negotiating authentication mode is performed during the process of capacity negotiation between the terminal and the base station. Before the capacity negotiation between the terminal and the base station, there are processes of networking initialization including distance measurement between the terminal and the base station.

In the above method for negotiating authentication mode, the authentication server determines the authentication mode supported by both the authentication server and the terminal according to whether the terminal passes the user verification. When the terminal is provided for the first time, it includes a digital certificate, for example, a WIMAX terminal further includes communication frequency point information of an initial usage. When the terminal is powered on for the first time, the interaction between the terminal and the authentication server adopts a method of device authentication. When the terminal operates for the first time after the device authentication is passed, the terminal uses the digital certificate to communicate with the authentication server at the pre-stored frequency point, registers an account (that is, creates user account information such as user name and password) and required services.

When the terminal is restarted, the terminal and the authentication server adopt user authentication because the terminal has user account information such as a user name and password. The user authentication is more secure than the device authentication adopted during the initial usage of the terminal.

The authentication server determines an authentication mode that is supported by both the authentication server and the terminal according to whether the terminal is powered on for the first time.

When the terminal is used for the first time, the authentication server selects an authentication mode corresponding to device authentication from the authentication mode respectively supported by the authentication server and the terminal. For example, if the authentication mode EAP-TLS corresponds to the device authentication, and this authentication mode is included both in the authentication mode supported by the terminal and in the authentication mode supported by the authentication server, the authentication server may select EAP-TLS as the negotiation result for use in the subsequent process of the authentication.

When the terminal is restarted to communicate with the authentication server after the terminal is used for the first time, it can be assumed that the terminal and the authentication server adopt the mode of user authentication. Authentication modes corresponding to the user authentication include EAP-TTLS, EAP-AKA and EAP-SIM. When the authentication modes respectively supported by the terminal and the authentication server both include the previous authentication modes, the authentication server can select one of them as the authentication mode for use in the process of authentication.

The terminal of the embodiment may be a mobile station, and the authentication mode supported by the mobile station may be carried in the BasicCapacities request message and sent to the base station. After being re-encapsulated by the base station, the authentication mode supported by the mobile station is carried in a terminal state change request and sent to the authentication server. Likewise, after determining the authentication mode supported by both the authentication server and the terminal, the authentication server carries the authentication mode supported by both the authentication server and the terminal in a terminal state change response and sends the terminal state change response to the base station. The base station re-encapsulates the authentication mode supported by both the authentication server and the terminal into a BasicCapacities response message, and sends the BasicCapacities response message to the mobile station. When the above negotiating the authentication mode is completed, the subsequent process of the authentication can be continued.

The authentication modes supported by the terminal and by both the authentication server and the terminal are represented with triples of Type-Length-Value, TLV, when being transferred. The description of the triples is given in detail with reference to the examples corresponding to Tables 1 and 2, and herein is omitted.

To sum up, the system for negotiating authentication mode is adopted according to the embodiment of the present disclosure, the TLV carrying the authentication modes respectively supported by the terminal and by both the terminal and the authentication server is added in the capacity negotiation process between the terminal, the base station and the authentication server before the authentication is performed, and a dynamic negotiation of authentication mode between the terminal and the authentication server is realized before the authentication process, so that the subsequent process of the authentication can be performed smoothly.

The third embodiment of the present disclosure provides a method for negotiating authentication mode, as shown in FIG. 3.

In step 301, a terminal receives from an authentication server a second negotiation request carrying an authentication mode supported by the authentication server.

In step 302, the terminal determines an authentication mode supported by both the authentication server and the terminal according to an authentication mode supported by the terminal and the authentication mode supported by the authentication server in the second negotiation request.

In step 303, the terminal sends the authentication mode supported by both the authentication server and the terminal to the authentication server.

The process of negotiating authentication mode of this embodiment is different from those in the first and second embodiments. The process of negotiating authentication mode of this embodiment is performed after a basic capability negotiation is completed, i.e., implemented during the process of an EAP authentication.

In details, the process of negotiating authentication mode is performed after a terminal identity identifier is transmitted between the terminal and the authentication server, and before the data interaction of the EAP authentication is performed. The transmission of the terminal identity identifier performed before the process of negotiating authentication mode of the embodiment is a process that the authentication server requires the terminal to upload the user identifier thereof, so that the authentication server verifies the terminal and the user identity in accordance with the user identifier.

To sum up, the method for negotiating authentication mode according to the embodiment is implemented during the process of the EAP authentication. The method determines a common authentication mode to be used in the subsequent process of the authentication, avoids human participation, and ensures the normal implementation of the authentication.

In the method for negotiating authentication mode that is provided in the embodiment, the second negotiation request is an extensible authentication protocol request. The authentication mode supported by both the authentication server and the terminal is carried in an extensible authentication protocol response and sent to the authentication server.

In the extensible authentication protocol request and extensible authentication protocol response, the authentication mode supported by both the terminal and the authentication server may be represented with Type-Value, and further represented with Boolean type value of the Value field in the Type-Value, as shown in Table 3.

**Table 3**

| | |
|---|---|
| Type | Type-Data |

In Table 3, the Type may be defined as EAP-TYPE-NEGO to be distinguished from other EAP authentication mode (e.g., EAP-TTLS authentication mode). With respect to the EAP authentication mode, e.g., the EAP-TTLS authentication mode, the Type-Data field includes type data corresponding to the EAP-TTLS authentication mode. In Table 3, the length of the Type-Data field is not fixed, which may be one or two bytes. The length shall be determined in accordance with the negotiation result between the terminal and the authentication server.

During the negotiation, if a security tunnel is not required in the process of the EAP authentication, the length of the Type-Data field is one byte. In this case, the way in which the one byte represents authentication mode can be seen from the definition of the Value field in Table 1, i.e., each bit represents an authentication method, and when a certain authentication mode is used, the bit representing the authentication mode is set to 1. When a certain authentication mode is not used, the bit representing the authentication mode is set to 0. For example, if bit 0 represents EAP-TLS, when the authentication mode for both the terminal and the authentication server is EAP-TLS, bit 0 is set to 1.

During the negotiation, if a security tunnel is required in the process of EAP authentication, a length of the Type-Data field is two bytes. For example, if the EAP-TTLS authentication mode is adopted, each bit of the first byte represents an authentication mode as mentioned previously, while each bit of the second byte represents a tunneling method. For example, with respect to the EAP-TTLS authentication mode, if bit 0 in the second byte of the Type-Data field represents CHAP tunneling authentication, then bit 0 is set to 1 when the EAP-TTLS tunneling authentication mode negotiated between the terminal and the authentication server is CHAP.

During the detailed authentication process of the present embodiment, the authentication server knows whether the terminal is initially powered on and whether the terminal passes the user authentication through communication with the terminal. When the terminal is initially powered on to communicate with the authentication server, the authentication between the terminal and the authentication server adopts a built-in digital certificate when the terminal is provided, and the authentication server can judge that the terminal and the authentication server shall use an authentication mode corresponding to the device authentication. If the terminal communicates with the authentication server at any time after being initially powered on to communicate with the authentication server, the terminal then has passed the device authentication, and acquired data related to a user authentication from the authentication server, and the user authentication can be performed between the terminal and the authentication server. Thus, except the communication between the terminal and the authentication server when the terminal is initially powered on, the authentication between the terminal and the authentication server adopts an authentication mode corresponding to the user authentication.

As the authentication server can judge whether a user authentication or a device authentication is adopted for the current communication with the terminal, the authentication server can select one of the authentication modes corresponding to the user authentication or device authentication and send the selected authentication mode to the terminal. For example, when the authentication server determines that the user authentication is adopted for the current communication with the terminal, the authentication server can select one of the authentication modes corresponding to the user authentication, such as EAP-TTLS, EAP-AKA and EAP-SIM, as a first authentication mode and send the selected authentication mode to the terminal. For example, if the authentication server selects EAP-TTLS as the first authentication mode, the authentication server sends EAP-TTLS to the terminal. After receiving the authentication mode EAP-TTLS sent by the authentication server, the terminal compares it with the authentication mode supported by the terminal, and if the authentication mode supported by the terminal is also EAP-TTLS, a confirmation result that EAP-TTLS is the authentication mode supported by both the authentication server and the terminal is sent to the authentication server. However, if the terminal finds that the authentication mode supported by the terminal is different from the authentication mode sent by the authentication server, the terminal continues to request the authentication server to send a second authentication mode supported by the authentication server itself. In response to the request, the authentication server continues to send another authentication mode supported by the authentication server to the terminal for a judgment by the terminal, until the terminal determines that the authentication mode supported and sent by the authentication server is the same as the authentication mode supported by the terminal, and then the terminal sends the authentication mode supported by both the authentication server and the terminal to the authentication server as a response.

To sum up, the method for negotiating authentication mode provided by the embodiment of the present disclosure adds a process of negotiating authentication mode at the initial stage of the authentication process; the authentication server initiates a message for the terminal to determine an authentication mode supported by both the authentication server and the terminal, and the terminal determines the authentication mode supported by both the authentication server and the terminal in response to the message; a dynamic negotiation about the authentication mode still can be performed before the authentication is performed, so that the subsequent authentication is more pertinent and needs no human participation as required in the conventional art, and intercommunications between terminals and network-side devices of different manufacturers can be achieved.

The eighth embodiment of the present disclosure provides a terminal, as shown in FIG. 7, comprising a receiving unit, a deciding unit and a sending unit connected in series.

The receiving unit is adapted to receive from an authentication server a second negotiation request carrying a first authentication mode supported by the authentication server.

The deciding unit is adapted to decide an authentication mode supported by both the authentication server and the terminal according to an authentication mode supported by the terminal and the first authentication mode supported by the authentication server in the second negotiation request.

The sending unit is adapted to send the authentication mode supported by both the authentication server and the terminal to the authentication server.

The deciding unit further comprises a judging unit and a determining unit.

The judging unit is adapted to judge whether the first authentication mode supported by the authentication server is the same as the authentication mode supported by the terminal.

The determining unit is connected to the judging unit, and adapted to determine the authentication mode supported by both the authentication server and the terminal is the authentication mode supported by the terminal, when the first authentication mode supported by the authentication server is the same as the authentication mode supported by the terminal.

The sending unit is connected to the judging unit, and further adapted to send to the authentication server a request for a second authentication mode supported by the authentication server, when the first authentication mode supported by the authentication server is different from the authentication mode supported by the terminal.

The receiving unit is further adapted to receive the second authentication mode supported and sent by the authentication server in response to the request.

The judging unit is adapted to judge whether the second authentication mode supported by the authentication server is the same as that supported by the terminal.

The determining unit is connected to the judging unit, and adapted to determine the authentication mode supported by both the authentication server and the terminal is the authentication mode supported by the terminal, when the second authentication mode supported by the authentication server is the same as the authentication mode supported by the terminal.

The terminal of the embodiment may be a mobile station, and the authentication server may be set in a gateway.

To sum up, the terminal of the embodiment of the present disclosure responds to a message for the terminal to determine an authentication mode supported by both the authentication server and the terminal initiated by the authentication server, and determines the authentication mode supported by both the authentication server and the terminal; a dynamic negotiation about the authentication mode still can be performed before the authentication is performed, so that the subsequent authentication is more pertinent and needs no human participation as required in the conventional art, and intercommunications between terminals and network-side devices of different manufacturers can be achieved.

The ninth embodiment of the present disclosure provides an authentication server as shown in FIG. 8, comprising a sending unit and a receiving unit connected to each other.

The sending unit is adapted to send a second negotiation request carrying a first authentication mode supported by the authentication server to a terminal, so that the terminal determines an authentication mode supported by both the authentication server and the terminal according to the authentication mode supported by the terminal and the first authentication mode supported by the authentication server in the second negotiation request.

The receiving unit is adapted to receive from the terminal the authentication mode supported by both the authentication server and the terminal.

The receiving unit is further adapted to receive from the terminal a request for a second authentication mode supported by the authentication server.

The sending unit is further adapted to send the second authentication mode supported by the authentication server to the terminal in response to the request.

The authentication server of the embodiment provides the terminal with another authentication mode supported thereby when the terminal requests an authentication mode supported by the authentication server again, so as to ensure that the authentication mode supported by the authentication server is the same as the authentication mode supported by the terminal, further ensure the successful progress of the dynamic negotiation, and prepare for the subsequent process of the negotiation.

The tenth embodiment of the present disclosure provides a system for negotiating authentication mode as shown in FIG. 9, comprising a terminal and an authentication server.

The terminal is adapted to receive from an authentication server a second negotiation request carrying a first authentication mode supported by the authentication server, determine an authentication mode supported by both the authentication server and the terminal according to the authentication mode supported by the terminal and the first authentication mode supported by the authentication server in the second negotiation request and send the authentication mode supported by both the authentication server and the terminal to the authentication server.

If the terminal finds out that the authentication mode supported by the terminal itself is different from the authentication mode sent by the authentication server, the terminal continues to request the authentication server to send a second authentication mode supported thereby. In response to the request, the authentication server continues to send another authentication mode supported by the authentication server to the terminal for a judgment by the terminal, until the terminal determines that the authentication mode supported and sent by the authentication server is the same as the authentication mode supported by the terminal, and then the terminal sends the authentication mode supported by both the authentication server and the terminal to the authentication server as a response.

To sum up, with the system for negotiating authentication mode according to the embodiment of the present disclosure, the authentication server initiates a message for the terminal to determine an authentication mode supported by both the authentication server and the terminal, the terminal responds to the message and determines the authentication mode supported by both the authentication server and the terminal. A dynamic negotiation about the authentication mode still can be performed before the authentication is performed, so that the subsequent authentication is more pertinent and needs no human participation as required in the conventional art, and intercommunications between terminals and network-side devices of different manufacturers can be achieved.

It is obvious that a person skilled in the art can make various changes and modifications to the present disclosure, without deviating from the scope of the present disclosure. Thus, the present disclosure is intended to include those changes and modifications, provided they fall within the scope of the claims and the equivalents thereof.

## Claims

1. A method for negotiating authentication mode, comprising:
sending a first negotiation request carrying an authentication mode supported by a terminal to an authentication server, so that the authentication server determines and sends an authentication mode supported by both the authentication server and the terminal according to an authentication mode supported by the authentication server and the authentication mode supported by the terminal carried in the first negotiation request; and
receiving from the authentication server the authentication mode supported by both the authentication server and the terminal.

2. The method according to claim 1, wherein sending the first negotiation request carrying the authentication mode supported by the terminal to the authentication server comprises:
sending a BasicCapacities request message carrying the authentication mode supported by the terminal to a base station currently serving the terminal, wherein the base station encapsulates the authentication mode supported by the terminal into the first negotiation request and sends the first negotiation request to the authentication server;
wherein receiving from the authentication server the authentication mode supported by both the authentication server and the terminal comprises:
receiving from the base station a BasicCapacities response message carrying the authentication mode supported by both the authentication server and the terminal,
wherein the base station receives from the authentication server a first negotiation response carrying the authentication mode supported by both the authentication server and the terminal, and encapsulates the authentication mode supported by both the authentication server and the terminal in the first negotiation response into the BasicCapacities response message.

3. The method according to claim 1 or 2, wherein the authentication mode supported by the terminal and the authentication mode supported by both the authentication server and the terminal are represented with triples of Type-Length-Value, TLV, and are further represented with Boolean type values of the content fields in the TLVs.

4. A method for negotiating authentication mode, comprising:
receiving from an authentication server a second negotiation request carrying an authentication mode supported by the authentication server;
determining an authentication mode supported by both the authentication server and a terminal from an authentication mode supported by the terminal and the authentication mode supported by the authentication server in the second negotiation request; and
sending the authentication mode supported by both the authentication server and the terminal to the authentication server.

5. The method according to claim 4, wherein,
the second negotiation request is an extensible authentication protocol request; and
the authentication mode supported by both the authentication server and the terminal is carried in an extensible authentication protocol response and sent to the authentication server;
wherein the authentication mode supported by the authentication server and the authentication mode supported by both the authentication server and the terminal are represented in a form of Type-Value;and are further represented with Boolean type values of the value field in the Type-Value.

6. A terminal, comprising:
a sending unit adapted to send a first negotiation request carrying an authentication mode supported by the terminal to an authentication server, so that the authentication server determines and sends an authentication mode supported by both the authentication server and the terminal, where the authentication mode supported by both the authentication server and the terminal is determined according to an authentication mode supported by the authentication server and the authentication mode supported by the terminal in the first negotiation request; and
a receiving unit connected to the sending unit and adapted to receive from the authentication server the authentication mode supported by both the authentication server and the terminal.

7. The terminal according to claim 6, wherein,
the sending unit is further adapted to send a BasicCapacities request message carrying the authentication mode supported by the terminal to a base station currently serving the terminal, wherein after encapsulating the authentication mode supported by the terminal into the first negotiation request, the base station sends the first negotiation request to the authentication server,
the receiving unit is further adapted to receive from the base station a BasicCapacities response message including the authentication mode supported by both the authentication server and the terminal;
wherein the base station receives from the authentication server a first negotiation response carrying the authentication mode supported by both the authentication server and the terminal and encapsulates the authentication mode supported by both the authentication server and the terminal in the first negotiation response into BasicCapacities response message.

8. A base station, comprising:
a receiving unit adapted to receive from a terminal a BasicCapacities request message carrying an authentication mode supported by the terminal, and to receive from an authentication server a first negotiation response carrying an authentication mode supported by both the authentication server and the terminal;
an encapsulating unit adapted to encapsulate the authentication mode supported by the terminal into a first negotiation request, and to encapsulate the authentication mode supported by both the authentication server and the terminal in the first negotiation response into a BasicCapacities response message; and
a sending unit adapted to send the first negotiation request to the authentication server, and to send the terminal the BasicCapacities response message including the authentication mode supported by both the authentication server and the terminal.

9. An authentication server, comprising:
a receiving unit adapted to receive from a terminal a first negotiation request carrying an authentication mode supported by the terminal;
a deciding unit adapted to decide an authentication mode supported by both the authentication server and the terminal, where the authentication mode is decided according to the an authentication mode supported by the authentication server and the authentication mode supported by the terminal in the first negotiation request; and
a sending unit adapted to send the terminal the authentication mode supported by both the authentication server and the terminal.

10. The authentication server according to claim 9, wherein the deciding unit comprises a judging unit and a determining unit,
the judging unit is adapted to judge whether the terminal passes a user authentication and a device authentication;
the determining unit is adapted to determine the authentication mode supported by both the authentication server and the terminal as an authentication mode corresponding to the user authentication, when the terminal passes the user authentication;
the determining unit is further adapted to determine the authentication mode supported by both the authentication server and the terminal as an authentication mode corresponding to the device authentication, when the terminal passes the device authentication while does not pass the user authentication.

11. A terminal, comprising:
a receiving unit adapted to receive from an authentication server a second negotiation request carrying a first authentication mode supported by the authentication server;
a deciding unit adapted to decide an authentication mode supported by both the authentication server and the terminal according to the an authentication mode supported by the terminal and the first authentication mode supported by the authentication server in the second negotiation request; and
a sending unit adapted to send the authentication mode supported by both the authentication server and the terminal to the authentication server.

12. The terminal according to claim 11, wherein the deciding unit comprises a judging unit and a determining unit,
the judging unit is adapted to judge whether the first authentication mode supported by the authentication server is the same as the authentication mode supported by the terminal;
the determining unit is connected to the judging unit, and adapted to determine the authentication mode supported by both the authentication server and the terminal is the authentication mode supported by the terminal, when the first authentication mode supported by the authentication server is the same as the authentication mode supported by the terminal; and
the sending unit is connected to the judging unit, and further adapted to send to the authentication server a request for a second authentication mode supported by the authentication server, when the first authentication mode supported by the authentication server is different from the authentication mode supported by the terminal.

13. The terminal according to claim 12, wherein,
the receiving unit is further adapted to receive the second authentication mode supported and sent by the authentication server in response to the request;
the judging unit is adapted to judge whether the second authentication mode supported by the authentication server is the same as the authentication mode supported by the terminal;
the determining unit is connected to the judging unit, and adapted to determine the authentication mode supported by both the authentication server and the terminal is the authentication mode supported by the terminal, when the second authentication mode supported by the authentication server is the same as the authentication mode supported by the terminal.

14. An authentication server, comprising:
a sending unit adapted to send a second negotiation request carrying a first authentication mode supported by the authentication server to a terminal, so that the terminal determines an authentication mode supported by both the authentication server and the terminal according to an authentication mode supported by the terminal and the first authentication mode supported by the authentication server in the second negotiation request; and
a receiving unit adapted to receive from the terminal the authentication mode supported by both the authentication server and the terminal.

15. The authentication server according to claim 14, wherein,
the receiving unit is further adapted to receive from the terminal a request for a second authentication mode supported by the authentication server; and
the sending unit is further adapted to send the second authentication mode supported by the authentication server to the terminal in response to the request.
